# EUROPÄISCHE PATENTSCHRIFT

(11) **EP 3 344 500 B1**
(45) Veröffentlichungstag und Bekanntmachung des Hinweises auf die Patenterteilung: **21.11.2018**
(21) Anmeldenummer: 16751197.1
(22) Anmeldetag: 21.07.2016
(51) Int. Cl.: B60S 1/56, G02B 27/00, B60S 1/52

(54) **KAMERAMODUL FÜR EIN KRAFTFAHRZEUG**
CAMERA MODULE FOR A MOTOR VEHICLE
MODULE DE CAMÉRA POUR UN VÉHICULE AUTOMOBILE

(30) Priorität: 04.09.2015 DE 102015114829
(43) Veröffentlichungstag der Anmeldung: 11.07.2018
(73) Patentinhaber: Huf Hülsbeck & Fürst GmbH & Co. KG, 42551 Velbert (DE)
(72) Erfinder: BARTHEL, Joachim, 45329 Essen (DE)
(86) Internationale Anmeldenummer: PCT/EP2016/067350
(87) Internationale Veröffentlichungsnummer: WO 2017/036664

(56) Entgegenhaltungen:
- DE-A1-102008 008 656
- DE-A1-102010 007 850
- US-A1- 2003 146 831

## Beschreibung

Die vorliegende Erfindung betrifft ein Kameramodul für ein Kraftfahrzeug gemäß dem Oberbegriff des Anspruches 1, wobei das Kameramodul eine Kameraeinheit mit einer Kamera und einer Linse umfasst, wobei die Kameraeinheit in einem Gehäuse angeordnet ist, und wobei die Kameraeinheit zwischen einer Passivposition, in welcher die Kameraeinheit zumindest teilweise in dem Gehäuse angeordnet ist, und einer Aktivposition, in welcher die Kameraeinheit zur bildlichen Erfassung eines Außenbereichs eines Kraftfahrzeugs dient, bewegbar ausgebildet ist. Zusätzlich umfasst das Kameramodul eine Antriebseinheit, welche mit der Kameraeinheit gekoppelt und dazu ausgebildet ist, die Kameraeinheit zwischen der Passivposition und der Aktivposition zu bewegen, und eine Reinigungsvorrichtung zur Reinigung der Linse der Kameraeinheit mit einem Fluidstrahl. Die DE 10 2008 008 656 A1 offenbart ein solches Kameramodul.

Aus bekannten Kameramodulen für Kraftfahrzeuge sind Reinigungsvorrichtungen bekannt, die zur Reinigung der Linse bzw. einer Linsenaußenfläche einen Fluidstrahl direkt auf die Linse aufbringen. Das Aufbringen erfolgt hierbei zumeist über Düsen der Reinigungsvorrichtung, welche in unmittelbarer Nähe der Linse bzw. der Linsenaußenfläche angeordnet sind.
Nachteilig im Stand der Technik ist, dass die Reinigung der Linsen meist unzureichend oder unvollständig erfolgt. Dies ist insbesondere damit zu begründen, dass die Düsen der Reinigungsvorrichtung lediglich diejenigen Bereiche der Linsenaußenfläche erreichen bzw. reinigen, die von der Düse der Reinigungsvorrichtung ausgehend nicht in einem Totwasserbereich oder einem Sprühschatten liegen. Dies tritt insbesondere bei konvexen Linsenaußenflächen auf.
Es ist die der Erfindung zugrunde liegende Aufgabe, ein Kameramodul anzugeben, welches die aus dem Stand der Technik bekannten Probleme überwindet und welche eine verbesserte Reinigung der Linsenaußenfläche ermöglicht.
Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Erfindungsgemäß wird die Aufgabe durch eine Kameramodul für ein Kraftfahrzeug mit einer Kameraeinheit mit einer Kamera und einer Linse gelöst, wobei die Kameraeinheit in einem Gehäuse angeordnet ist, und wobei die Kameraeinheit zwischen einer Passivposition, in welcher die Kameraeinheit zumindest teilweise in dem Gehäuse angeordnet ist, und einer Aktivposition, in welcher die Kameraeinheit zur bildlichen Erfassung eines Außenbereichs eines Kraftfahrzeugs dient, bewegbar ausgebildet ist, und einer Antriebseinheit, welche mit der Kameraeinheit gekoppelt und dazu ausgebildet ist, die Kameraeinheit zwischen der Passivposition und der Aktivposition zu bewegen, und einer Reinigungsvorrichtung zur Reinigung der Linse der Kameraeinheit mit einem Fluidstrahl, wobei das Kameramodul ein Umlenkelement zur Umlenkung des Fluidstrahls auf die Linse aufweist. Dadurch wird beispielsweise der technische Vorteil erreicht, dass eine vollständige und gründliche Reinigung der Linsenaußenfläche erfolgt. Das Umlenkelement verhindert, dass ein Totwasserbereich auf der Linsenaußenfläche verbleibt, indem der Fluidstrahl von einer geeigneten Richtung aufgebracht wird. In der Konsequenz wird die Qualität des Reinigungsvorgangs erheblich verbessert.

Durch geeignete Ausbildung des Umlenkelements ist es möglich, den Fluidstrahl durch das Auftreffen auf das Umlenkelement derart auszurichten, dass die vollständige Linsenaußenfläche von dem Fluidstrahl erreicht wird. Hierfür ist das Umlenkelement ausgebildet, den Fluidstrahl für eine Reinigung einer vollständigen Linsenaußenfläche umzulenken.

Gemäß einer besonderen Ausführungsform weist das Kameramodul eine Klappe auf, um die Kameraeinheit in der Passivposition abzudecken. Dadurch wird beispielsweise der technische Vorteil erreicht, dass die gesamte Kameraeinheit in der Passivposition geschützt und vor äußeren Einflüssen abgeschirmt ist. Kameralinsen stellen häufig empfindliche Bauteile dar und werden deshalb leicht beschädigt. Hierfür stellt eine Klappe eine effektive Schutzeinrichtung dar um die Lebensdauer einer Kameralinse zu erhöhen.

Um das Anordnen des Umlenkelements besonders einfach zu realisieren, ist das Umlenkelement an der Klappe angeordnet. Es ist hierbei besonders kostengünstig in der Herstellung und mit einem vergleichsweise geringen Montageaufwand verbunden, das Umlenkelement einstückig mit der Klappe auszubilden. Alternativ ist es gemäß einer weitere Ausführungsform jedoch ebenso denkbar, das Umlenkelement anclipsbar mit der Klappe auszubilden. Dies hätte insbesondere den Vorteil, dass zu unterschiedlichen Linsen bzw. zu unterschiedlichen Kameraeinheiten entsprechend unterschiedliche Umlenkelemente an der Klappe angeordnet werden können. Insofern ermöglicht diese Ausführungsform eine flexible Anpassung an unterschiedliche Linsen bzw. an unterschiedliche Kameraeinheiten.

Um die Reinigungsleistung besonders effektiv zu realisieren bzw. um das Umlenken des Fluidstrahls auf die Linsenaußenfläche besonders präzise zu gewährleisten, ist das Umlenkelement mittig an der Klappe und angrenzend an die Linse der Kamera angeordnet.

Um die Umlenkung des Fluidstrahls von der Reinigungsvorrichtung über das Umlenkelement auf die Linsenaußenfläche besonders zielgerichtet und möglichst genau zu ermöglichen, ist das Umlenkelement rampenförmig ausgebildet. Gemäß einer weiteren Ausführungsform ist es alternativ jedoch ebenso möglich das Umlenkelement konkav auszubilden.

Um die Reinigungsleistung zusätzlich zu erhöhen bzw. um ein vollständige Benetzung der gesamten Linsenaußenfläche zu realisieren, ist das Umlenkelement schwenkbar ausgebildet. In Verbindung mit einem Antrieb wäre es hierbei möglich durch eine Schwenkbewegung während des Reinigungsvorgangs, eine besonders gründliche Reinigung der Linsenaußenfläche zu ermöglichen.

Um eine besonders kompakte Reinigungsvorrichtung zu realisieren und um die Reinigungsvorrichtung in dem Gehäuse des Kameramoduls unterzubringen, ist Reinigungsvorrichtung stabförmig ausgebildet. Das Reinigungsfluid wird somit seitlich aus der stabförmigen Reinigungsvorrichtung ausgebracht. Im Zusammenwirken mit dem Umlenkelement ist jedoch eine Reinigung der gesamten Linsenaußenfläche ohne Totwasserbereich bzw. ohne Sprühschatten möglich. Hierbei kann die Reinigungsvorrichtung fest am Gehäuse angeordnet sein, um eine noch kompaktere und modulare Realisierung der Reinigungsvorrichtung und damit auch des Kameramoduls zu realisieren.

Nach einer weiteren Ausführungsform, ist die Reinigungsvorrichtung mit der Antriebseinheit gekoppelt ausgebildet. Somit besteht die Möglichkeit die Reinigungsvorrichtung in eine verbesserte Position zu überführen, um den Fluidstrahl auf das Umlenkelement aufzubringen. Zusätzlich bietet die Kopplung mit der Antriebseinheit die Möglichkeit, die Reinigungsvorrichtung nach einem Reinigungsvorgang wieder in das Gehäuse des Kameramoduls einzuziehen, wodurch ein verbesserter Schutz und eine verlängerte Lebensdauer realisiert werden. Denkbar wäre es hier beispielsweise, die Reinigungsvorrichtung mit Hilfe der Antriebseinheit teleskopartig aus- und einzufahren.

Gemäß einer besonders bevorzugten Ausführungsform ist die Klappe mit der Antriebseinheit gekoppelt ausgebildet. Dies ermöglicht, dass die Klappe automatisch in Verbindung mit einem Reinigungsvorgang geöffnet und am Ende eines Reinigungsvorgangs wieder geschlossen wird. Dies kann beispielsweise dadurch erfolgen, dass die Klappe schwenkbar ausgebildet ist. Alternativ kann sie jedoch auch translatorisch oder durch eine Kombination aus einer Schwenk- und einer Translationsbewegung geöffnet oder geschlossen werden.

Um den Herstellungsaufwand und die Montage der Klappe an dem Kameramodul zu reduzieren, ist die Klappe derart ausgebildet, dass sie durch die Bewegung der Kamera von der Passivposition in die Aktivposition geöffnet werden kann. Dies erhöht zusätzlich die Zuverlässigkeit des Kameramoduls. Hierbei kann ist die Klappe vorzugsweise federgelagert ausgebildet, um ein automatisches Verschließen nach einem Reinigungsvorgang zu gewährleisten.

Ausführungsbeispiele der Erfindung sind in den Zeichnungen dargestellt und werden im Folgenden näher beschrieben.

Es zeigen:
- Fig. 1: eine schematische Darstellung eines Kameramoduls mit Gehäuse,
- Fig. 2: eine schematische Darstellung eines Kameramoduls ohne Gehäuse,
- Fig. 3: eine weitere schematische Darstellung eines Kameramoduls ohne Gehäuse,
- Fig. 4: eine schematische Darstellung einer Klappe mit Umlenkelement,
- Fig. 5: eine schematische Darstellung eines Kameramoduls in der Passivposition, und
- Fig. 6: eine schematische Darstellung eines Kameramoduls in der Aktivposition.

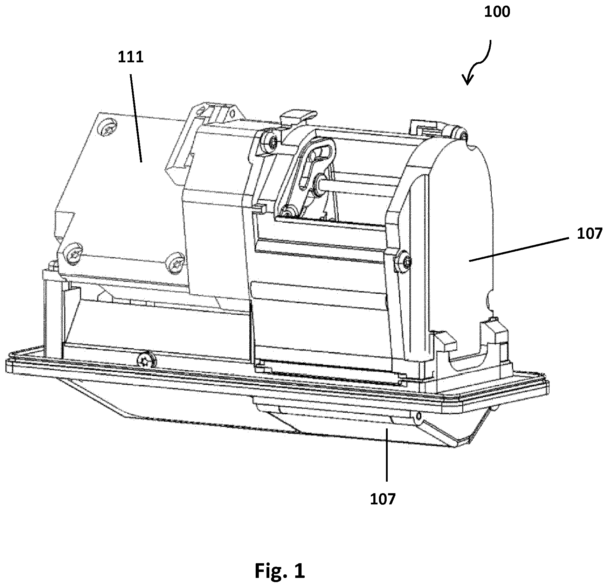

Die Figur 1 zeigt eine schematische Darstellung eines Kameramoduls 100 mit einem Gehäuse 107 und einer an das Gehäuse 107 angrenzenden Antriebseinheit 111. Im Inneren des Gehäuses 107 ist eine Kameraeinheit 101 (nicht gezeigt) mit einer Kamera 103 und einer Linse 105 angeordnet, wobei die Kameraeinheit 101 zwischen einer Passivposition, in welcher die Kameraeinheit 101 zumindest teilweise in dem Gehäuse 107 angeordnet ist, und einer Aktivposition, in welcher die Kameraeinheit 101 einen Außenbereich eines Kraftfahrzeugs bildlich erfassen kann, bewegbar ist. Die Antriebseinheit 111 ist mit der Kameraeinheit 101 gekoppelt und kann die Kameraeinheit 101 zwischen der Passivposition und der Aktivposition hin und her bewegen. Zusätzlich ist in dem Gehäuse 107 eine Reinigungsvorrichtung 113 (nicht gezeigt) angeordnet, die entweder mit der Antriebseinheit 111 gekoppelt ausgebildet ist oder alternativ fest mit dem Gehäuse 107 des Kameramoduls 100 verbunden ist.

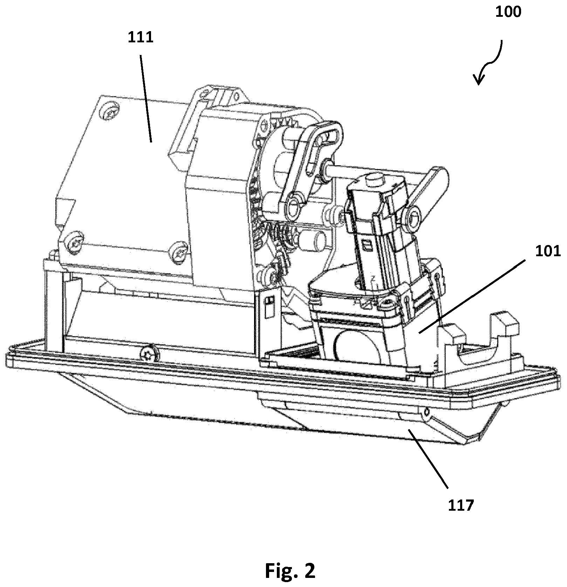

Die Figur 2 zeigt eine schematische Darstellung eines Kameramoduls 100 ohne Gehäuse 107. Im Inneren des Gehäuses 107 befindet sich die Kameraeinheit 101 mit der Kamera 103 und der Linse 105, wobei sich die Kameraeinheit 101 in einer Passivposition befindet. Die Antriebseinheit 111 ist mechanisch mit der Kameraeinheit 101 gekoppelt und kann die Kameraeinheit 101 zwischen der Passivposition und der Aktivposition hin und her bewegen. An einem unteren Abschnitt des Kameramoduls 100 befindet sich eine Klappe 117, um die Kameraeinheit 101 in der Passivposition abzudecken. Die Klappe 117 befindet sich in einer geschlossenen Position.

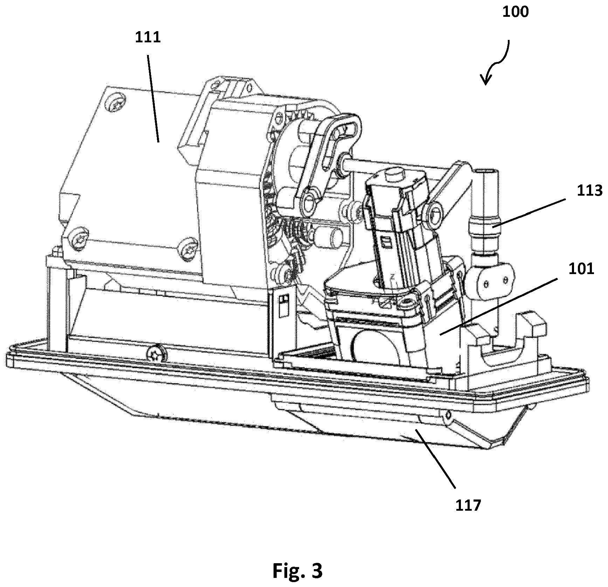

Die Figur 3 zeigt eine weitere schematische Darstellung eines Kameramoduls 100 ohne Gehäuse 107. Zusätzlich befindet sich angrenzend an die Kameraeinheit 101 die Reinigungsvorrichtung 113 zur Reinigung der Linse 105 (nicht gezeigt) der Kameraeinheit 101 mittels eines Fluidstrahls. Die Reinigungsvorrichtung 113 kann ebenfalls mit der Antriebseinheit 111 gekoppelt ausgebildet oder fest mit dem Gehäuse 107 verbunden sein.

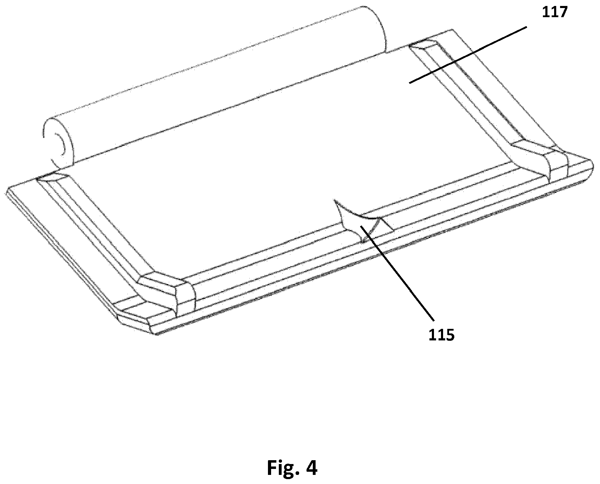

Die Figur 4 zeigt eine schematische Darstellung einer Klappe 117 mit einem Umlenkelement 115. Das Umlenkelement 115 ist einstückig mit der Klappe 117 ausgebildet, jedoch ist ebenso eine Realisierung mit austauschbarem Umlenkelement 115 denkbar. Das Umlenkelement 115 ist dazu ausgebildet, den von der Reinigungsvorrichtung 113 ausgehenden Fluidstrahl derart umzulenken, dass dieser auf die Linse 105 optimal auftrifft. Optimal bedeutet in diesem Zusammenhang, dass der umgelenkte Fluidstrahl eine vollständige Reinigung einer Linsenaußenfläche 106 bewirkt, ohne Verunreinigungen in einem Totwasserbereich zurückzulassen. Das Umlenkelement 115 ist in der Figur 4 konkav ausgebildet. Alternativ ist es jedoch ebenso denkbar das Umlenkelement 115 rampenförmig auszubilden.

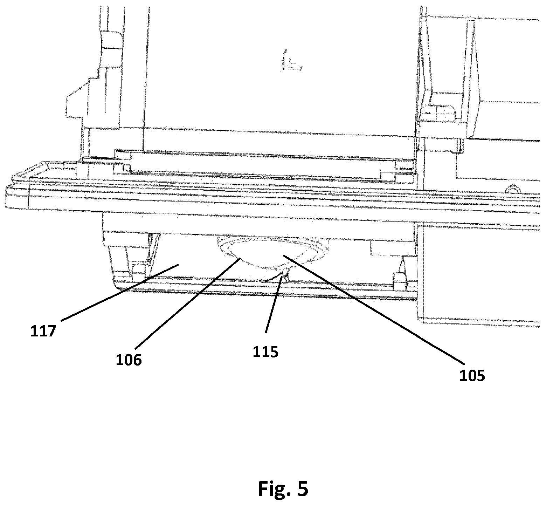

Die Figur 5 zeigt eine schematische Darstellung eines Kameramoduls 100 in der Passivposition. Die Kameraeinheit 101 (nicht gezeigt) ist zumindest teilweise in dem Gehäuse 107 angeordnet und die Klappe 117 verdeckt die Linse 105 der Kameraeinheit 101. Die Linse 105 weist eine zur Klappe 117 weisende Linsenaußenfläche 106 auf und das Umlenkelement 115 ist mittig an der Klappe 117 und angrenzend an der Linse 105 bzw. an der Linsenaußenfläche 106 der Kameraeinheit 101 angeordnet.

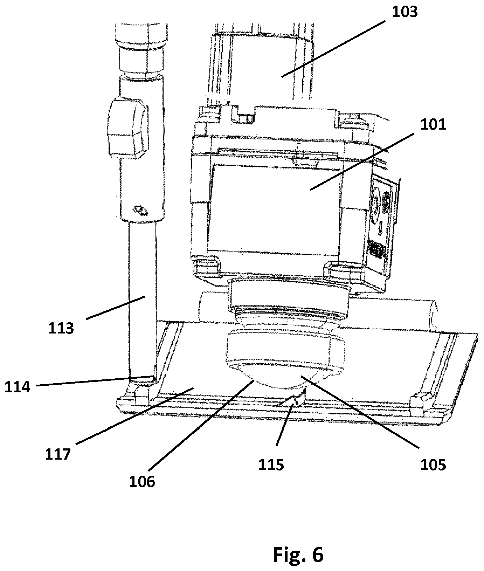

Die Figur 6 zeigt eine schematische Darstellung eines Kameramoduls 100 in der Aktivposition. Angrenzend bzw. parallel zur Kameraeinheit 101 angeordnet befindet sich die stabförmige Reinigungsvorrichtung 113 mit einer seitlich an der stabförmigen Reinigungsvorrichtung 113 angeordneten Düse 114. Durch das seitliche Ausbringen eines Fluidstrahls aus der Düse 114, trifft der Fluidstrahl direkt auf das konkav ausgebildete Umlenkelement 115. In der Konsequenz wird der Fluidstrahl durch das Umlenkelement 115 umgelenkt und auf die Linsenaußenfläche 106 der Linse 105 aufgebracht. Die Klappe 117 befindet sich hierbei in einer geöffneten Position, wobei die Klappe 117 ebneso mit der Antriebseinheit 111 gekoppelt ausgebildet ist. Hierbei kann die Klappe 117 durch eine schwenkende Bewegung bewegbar ausgebildet sein, wobei die Klappe 117 bei Erreichen des geöffneten Zustands genau so angeordnet ist, dass das Umlenkelement 115 in Abhängigkeit der Düse 114 der Reinigungsvorrichtung 113 bzw. des Fluidstrahls und der Position der Linsenaußenfläche 106 ein Aufbringen des umgelenkten Fluidstrahls auf die Linsenaußenfläche 106 ermöglicht. Alternativ ist es jedoch auch möglich, die Klappe 117 ohne Kopplung mit der Antriebseinheit 111 vorzusehen. In diesem Fall ist die Klappe 117 so ausgebildet, dass sie durch die Bewegung der Kamera 103 von der Passivposition in die Aktivposition geöffnet werden kann. Hierbei bietet es sich an, die Klappe 117 federgelagert auszubilden um ein vollständiges Verschließen der Klappe 117 nach einem erfolgten Reinigungsvorgang zu gewährleisten.

### BEZUGSZEICHENLISTE

- 100: Kameramodul
- 101: Kameraeinheit
- 103: Kamera
- 105: Linse
- 106: Linsenaußenfläche
- 107: Gehäuse
- 111: Antriebseinheit
- 113: Reinigungsvorrichtung
- 114: Düse
- 115: Umlenkelement
- 117: Klappe

## Patentansprüche

1. Kameramodul (100) für ein Kraftfahrzeug mit einer Kameraeinheit (101) mit einer Kamera (103) und einer Linse (105), wobei die Kameraeinheit (101) in einem Gehäuse (107) angeordnet ist, und wobei die Kameraeinheit (101) zwischen einer Passivposition, in welcher die Kameraeinheit (101) zumindest teilweise in dem Gehäuse (105) angeordnet ist, und einer Aktivposition, in welcher die Kameraeinheit (101) zur bildlichen Erfassung eines Außenbereichs eines Kraftfahrzeugs dient, bewegbar ausgebildet ist, und einer Antriebseinheit (111), welche mit der Kameraeinheit (101) gekoppelt und dazu ausgebildet ist, die Kameraeinheit (101) zwischen der Passivposition und der Aktivposition zu bewegen, und einer Reinigungsvorrichtung (113) zur Reinigung der Linse (105) der Kameraeinheit (101) mit einem Fluidstrahl, **dadurch gekennzeichnet, dass** das Kameramodul (100) ein Umlenkelement (115) zur Umlenkung des Fluidstrahls auf die Linse (105) aufweist.

2. Kameramodul (100) gemäß Anspruch 1, **dadurch gekennzeichnet, dass** das Umlenkelement (115) ausgebildet ist, den Fluidstrahl für eine Reinigung einer vollständigen Linsenaußenfläche (106) umzulenken.

3. Kameramodul (100) gemäß einem der vorangehenden Ansprüche, **dadurch gekennzeichnet, dass** das Kameramodul (100) eine Klappe (117) aufweist, um die Kameraeinheit (101) in der Passivposition abzudecken.

4. Kameramodul (100) gemäß Anspruch 3, **dadurch gekennzeichnet, dass** das Umlenkelement (115) an der Klappe (117) angeordnet ist.

5. Kameramodul (100) gemäß Anspruch 3 oder 4, **dadurch gekennzeichnet, dass** das Umlenkelement (115) einstückig mit der Klappe (117) ausgebildet ist.

6. Kameramodul (100) gemäß Anspruch 3 oder 4, **dadurch gekennzeichnet, dass** das Umlenkelement (115) anclipsbar mit der Klappe (117) ausgebildet ist.

7. Kameramodul (100) gemäß einem der Ansprüche 3 bis 6, **dadurch gekennzeichnet, dass** das Umlenkelement (115) mittig an der Klappe (117) und angrenzend an die Linse (105) der Kameraeinheit (101) angeordnet ist.

8. Kameramodul (100) gemäß einem der vorangehenden Ansprüche, **dadurch gekennzeichnet, dass** das Umlenkelement (115) rampenförmig ausgebildet ist.

9. Kameramodul (100) gemäß einem der Ansprüche 1 bis 7, **dadurch gekennzeichnet, dass** das Umlenkelement (115) konkav ausgebildet ist.

10. Kameramodul (100) gemäß einem der vorangehenden Ansprüche, **dadurch gekennzeichnet, dass** das Umlenkelement (115) schwenkbar ausgebildet ist.

11. Kameramodul (100) gemäß einem der vorangehenden Ansprüche, **dadurch gekennzeichnet, dass** die Reinigungsvorrichtung (113) stabförmig ausgebildet ist.

12. Kameramodul (100) gemäß einem der vorangehenden Ansprüche, **dadurch gekennzeichnet, dass** die Reinigungsvorrichtung (113) mit der Antriebseinheit (111) gekoppelt ausgebildet ist.

13. Kameramodul (100) gemäß einem der Ansprüche 1 bis 11, **dadurch gekennzeichnet, dass** die Reinigungsvorrichtung (113) fest am Gehäuse (107) angeordnet ist.

14. Kameramodul (100) gemäß einem der Ansprüche 3 bis 7, **dadurch gekennzeichnet, dass** die Klappe (117) schwenkbar ausgebildet ist.

15. Kameramodul (100) gemäß einem der Ansprüche 3 bis 7 und 14, **dadurch gekennzeichnet, dass** die Klappe (117) mit der Antriebseinheit (111) gekoppelt ausgebildet ist.

16. Kameramodul (100) gemäß einem der Ansprüche 3 bis 7 und 14, **dadurch gekennzeichnet, dass** die Klappe (117) derart ausgebildet ist, dass sie durch die Bewegung der Kamera (103) von der Passivposition in die Aktivposition geöffnet werden kann.

17. Kameramodul (100) gemäß Anspruch 16, **dadurch gekennzeichnet, dass** die Klappe (117) federgelagert ausgebildet ist.

## Claims

1. Camera module (100) for a motor vehicle with a camera unit (101) having a camera (103) and a lens (105), wherein the camera unit (101) is arranged in a housing (107), and wherein the camera unit (101) is designed to be movable between a passive position in which the camera unit (101) is disposed at least partially inside the housing (105), and an active position in which the camera unit (101) serves for visual detection of an external region of a motor vehicle, and having a drive unit (111) which is coupled to the camera unit (101) and is designed to move the camera unit (101) between the passive position and the active position, and having a cleaning device (113) for cleaning the lens (105) of the camera unit (101) with a fluid jet, **characterized in that** the camera module (100) is equipped with a deflecting element (115) for deflecting the fluid stream onto the lens (105).

2. Camera module (100) according to claim 1, **characterized in that** the deflecting element (115) is designed to redirect the fluid jet for cleaning an entire lens outer surface (106).

3. Camera module (100) according to one of the preceding claims, **characterized in that** the camera module (100) includes a cover flap (117) for covering the camera unit (101) in the passive position.

4. Camera module (100) according to claim 3, **characterized in that** the deflecting element (115) is arranged on the cover flap (117).

5. Camera module (100) according to claim 3 or 4, **characterized in that** the deflecting element (115) is constructed integrally with the cover flap (117).

6. Camera module (100) according to claims 1 to 4, **characterized in that** the deflecting element (115) is constructed so that it can be clipped onto the cover flap (117).

7. Camera module (100) according to one of claims 3 to 6, **characterized in that** the deflecting element (115) is arranged in the middle of the cover flap (117) and adjacent to the lens (105) of the camera unit (101).

8. Camera module (100) according to any one of the preceding claims, **characterized in that** the deflecting element (115) is in the form of a ramp.

9. Camera module (100) according to any one of claims 1 to 7, **characterized in that** the deflecting element (115) is concave.

10. Camera module (100) according to any one of the preceding claims, **characterized in that** the deflecting element (115) is designed to be pivotable.

11. Camera module (100) according to any one of the preceding claims, **characterized in that** the cleaning device (113) is rod-shaped.

12. Camera module (100) according to any one of the preceding claims, **characterized in that** the cleaning device (113) is coupled to the drive unit (111).

13. Camera module (100) according to any one of claims 1 to 11, **characterized in that** the cleaning device (113) arranged fixedly on the housing (107).

14. Camera module (100) according to any of claims 3 to 7, **characterized in that** the cover flap (117) is designed to be pivotable.

15. Camera module (100) according to any of claims 3 to 7 and 14, **characterized in that** the cover flap (117) is coupled to the drive unit (111).

16. Camera module (100) according to any of claims 3 to 7 and 14, **characterized in that** the cover flap (117) is designed in such manner that it can be opened by the movement of the camera (103) from the passive position into the active position.

17. Camera module (100) according to claim 16, **characterized in that** the cover flap (117) is spring-mounted.

## Revendications

1. Module de caméra (100), destiné à un véhicule automobile, pourvu d'une unité de caméra (101) avec une caméra (103) et une lentille (105), l'unité de caméra (101) étant placée dans un boîtier (107) et l'unité de caméra (101) étant conçue pour être mobile entre une position passive, dans laquelle l'unité de caméra (101) est placée au moins en partie dans le boîtier (105) et une position active, dans laquelle l'unité de caméra (101) sert à l'enregistrement d'images d'une zone extérieure d'un véhicule automobile et d'une unité d'entraînement (111), qui est accouplée avec l'unité de caméra (101) et conçue pour déplacer l'unité de caméra (101) entre la position passive et la position active, et d'un dispositif de nettoyage (113) pour le nettoyage de la lentille (105) de l'unité de caméra (101) avec un jet de fluide, **caractérisé en ce que** le module de caméra (100) comporte un élément de renvoi (115) destiné à renvoyer le jet de fluide sur la lentille (105).

2. Module de caméra (100) selon la revendication 1, **caractérisé en ce que** l'élément de renvoi (115) est conçu pour renvoyer le jet de fluide pour un nettoyage d'une surface extérieure de lentille (106) complète.

3. Module de caméra (100) selon l'une quelconque des revendications précédentes, **caractérisé en ce que** le module de caméra (100) comporte un volet (117), destiné à recouvrir l'unité de caméra (101) dans la position passive.

4. Module de caméra (100) selon la revendication 3, **caractérisé en ce que** l'élément de renvoi (115) est placé sur le volet (117).

5. Module de caméra (100) selon la revendication 3 ou 4, **caractérisé en ce que** l'élément de renvoi (115) est conçu en monobloc avec le volet (117).

6. Module de caméra (100) selon la revendication 3 ou 4, **caractérisé en ce que** l'élément de renvoi (115) est conçu de sorte à pouvoir se clipser sur le volet (117) .

7. Module de caméra (100) selon l'une quelconque des revendications 3 à 6, **caractérisé en ce que** l'élément de renvoi (115) est placé au centre sur le volet (117) et en jouxtant la lentille (105) de l'unité de caméra (101) .

8. Module de caméra (100) selon l'une quelconque des revendications précédentes, **caractérisé en ce que** l'élément de renvoi (115) est conçu en forme de rampe.

9. Module de caméra (100) selon l'une quelconque des revendications 1 à 7, **caractérisé en ce que** l'élément de renvoi (115) est conçu de forme concave.

10. Module de caméra (100) selon l'une quelconque des revendications précédentes, **caractérisé en ce que** l'élément de renvoi (115) est conçu pour être pivotant.

11. Module de caméra (100) selon l'une quelconque des revendications précédentes, **caractérisé en ce que** le dispositif de nettoyage (113) est conçu en forme de barre.

12. Module de caméra (100) selon l'une quelconque des revendications précédentes, **caractérisé en ce que** le dispositif de nettoyage (113) est conçu en étant accouplé avec l'unité d'entraînement (111).

13. Module de caméra (100) selon l'une quelconque des revendications 1 à 11, **caractérisé en ce que** le dispositif de nettoyage (113) est placé de manière fixe sur le boîtier (107).

14. Module de caméra (100) selon l'une quelconque des revendications 3 à 7, **caractérisé en ce que** le volet (117) est conçu pour être pivotant.

15. Module de caméra (100) selon l'une quelconque des revendications 3 à 7 et 14, **caractérisé en ce que** le volet (117) est conçu en étant accouplé avec l'unité d'entraînement (111).

16. Module de caméra (100) selon l'une quelconque des revendications 3 à 7 et 14, **caractérisé en ce que** le volet (117) est conçu de sorte à pouvoir s'ouvrir par un déplacement de la caméra (103) de la position passive dans la position active.

17. Module de caméra (100) selon la revendication 16, **caractérisé en ce que** le volet (117) est conçu en étant monté sur ressort.
